# FASCICULE DE BREVET EUROPEEN

(11) **EP 0 798 457 B1**
(45) Date de publication et mention de la délivrance du brevet: **14.11.2001**
(21) Numéro de dépôt: 97400706.4
(22) Date de dépôt: 27.03.1997
(51) Int. Cl.: F02M 37/10

(54) **Dispositif de pompage de carburant pour reservoir multipoches**
Brennstoffpumpenvorrichtung für Mehrkammertank
Fuel pump device for multi compartment tank

(30) Priorité: 28.03.1996 FR 9603870
(43) Date de publication de la demande: 01.10.1997
(73) Titulaire: MARWAL SYSTEMS, 51000 Chalons en Champagne (FR)
(72) Inventeur: Denneulin, Denis, 51100 Chalons en Champagne (FR); Taurel, Jean-Luc, 54970 Landres (FR)
(74) Mandataire: Texier, Christian

(56) Documents cités:
- DE-A- 4 027 948
- US-A- 5 111 844
- PATENT ABSTRACTS OF JAPAN vol. 17, no. 99 (M-1373), 26 Février 1993 & JP 04 292567 A (TOYOTA), 16 Octobre 1992,
- PATENT ABSTRACTS OF JAPAN vol. 12, no. 67 (M-673), 2 Mars 1988 & JP 62 214263 A (NIPPON DENSO), 21 Septembre 1987,

## Description

La présente invention concerne le domaine des dispositifs de pompage de carburant pour réservoirs multipoches. Elle vise plus particulièrement un dispositif de pilotage d'une pompe électrique de carburant placée entre des poches de réservoir, notamment pour véhicule automobile.

Certains véhicules automobiles comportent des réservoirs de carburant multipoches. Les poches de ces réservoirs sont réparties dans la structure du véhicule, par exemple de part et d'autre d'un essieu, et communiquent entre elles.

Cependant les poches de tels réservoirs peuvent être éloignées ou disposées à des niveaux différents ou encore séparées par un cloisonnement. Consécutivement, le carburant ne s'écoule pas naturellement vers le point de pompage principal du carburant, généralement situé dans une poche principale, à partir duquel le carburant est dirigé vers le moteur.

Pour cette raison, il a été proposé d'adjoindre à ces dispositifs des moyens de pompage secondaire adaptés pour transférer le carburant d'au moins une poche secondaire vers la poche principale.

On connaît des dispositifs de pompage secondaire à effet Venturi pilotés par exemple par la conduite de retour du carburant du moteur vers le réservoir.

Un inconvénient d'un tel dispositif est la surpression qui apparaît dans le tube de Venturi et dans la conduite de retour. Ces dispositifs ne conviennent pas aux moteurs Diesel dans lesquels la pompe de compression ne tolère pas de surpression sur la conduite de retour au réservoir.

D'autres dispositifs connus de pompage secondaire comportent des pompes électriques de transfert de carburant entre poches. On constate que ces dispositifs ne donnent pas totalement satisfaction. Par exemple, ces pompes peuvent se désamorcer quand le niveau de carburant oscille et/ou présente dans certaines conditions des échauffements inacceptables.

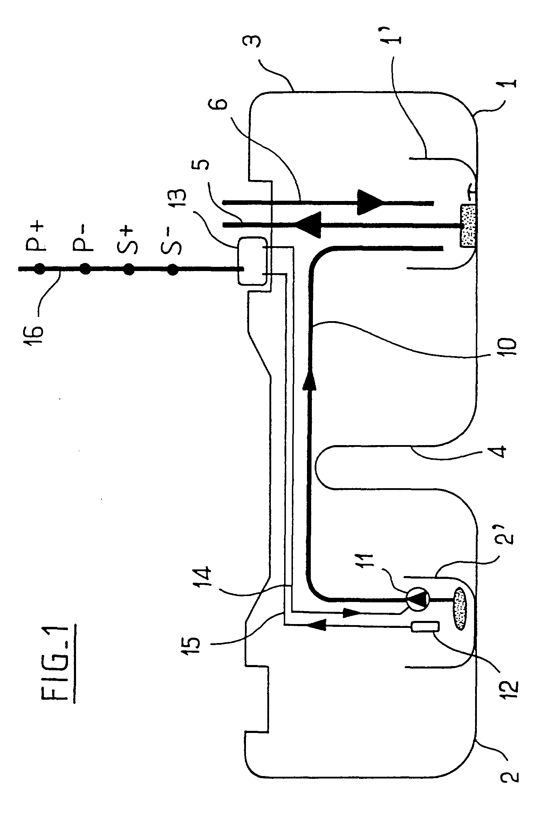

Le document DE-A-4027948 décrit au regard de sa figure 1, un dispositif de pompage de carburant comprenant dans un réservoir 1 un bol de réserve 8, une pompe 9 actionnée par un moteur 10 adapté pour pomper du carburant dans le bol 8 et le diriger vers une rampe d'injecteur 2, et une pompe 11 actionnée par un moteur 11.1 adapté pour prélever du carburant dans le réservoir 1 et le transférer dans le bol de réserve 8. La pompe 11 est contrôlée par un module de commande 6 lui-même piloté par des capteurs de niveau 16U, 160 placés sur le bol de réserve 8.

D'une part, le document DE-A-4027948 ne concerne pas un réservoir multipoches comme l'invention, mais un réservoir monopoche équipé d'un bol de réserve. D'autre part et surtout, selon le document DE-A-4027948 la pompe 11 est pilotée par des capteurs 16 placés sur le bol de réserve, c'est-à-dire sur le volume de destination. Une telle disposition ne donne pas satisfaction.

Un but de la présente invention est de remédier aux inconvénients précités. Ce but est atteint selon l'invention en réalisant un dispositif de pompage de carburant d'un réservoir multipoche, notamment de véhicule automobile, comprenant une pompe principale prélevant le carburant dans une poche principale pour le diriger vers un lieu d'utilisation, au moins une pompe secondaire électrique apte à transférer du carburant d'une poche secondaire vers la poche principale, et un circuit de pilotage de la pompe secondaire électrique dans lequel le circuit de pilotage comporte une détection du niveau de carburant dans la poche secondaire, de sorte que le circuit interrompt le fonctionnement de la pompe secondaire lorsqu'un niveau minimal est détecté dans la poche secondaire.

Un avantage d'un tel dispositif est qu'il évite le fonctionnement à sec de la pompe électrique qui pourrait provoquer sa destruction. Pendant une phase de fonctionnement à sec, appelée parfois "Dry run", la pompe comprime de l'air et les organes d'actuation s'échauffent et peuvent entraîner la destruction thermique de la pompe.

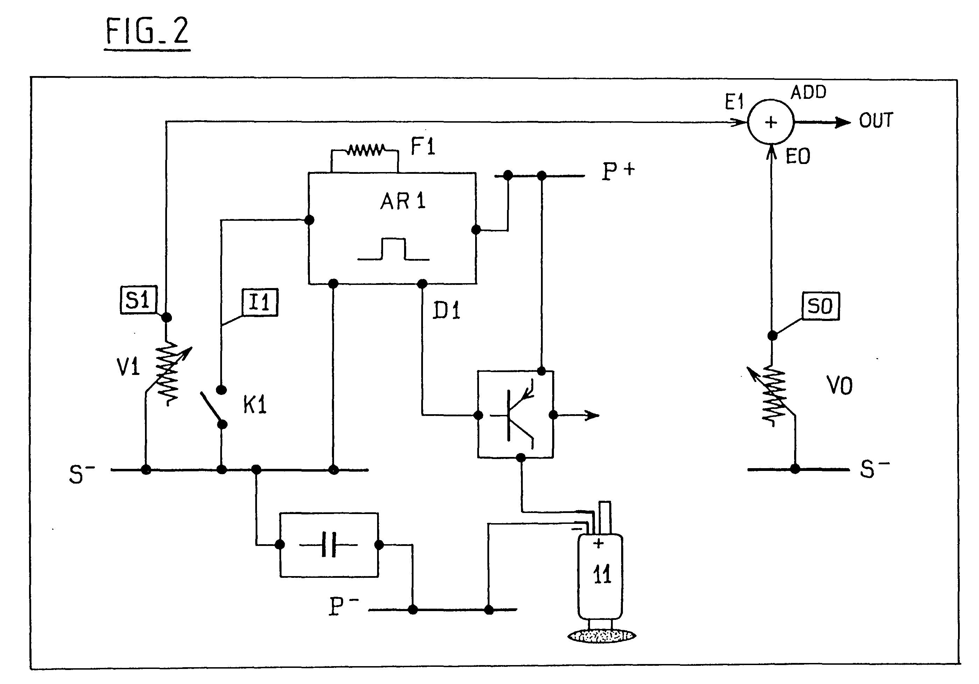

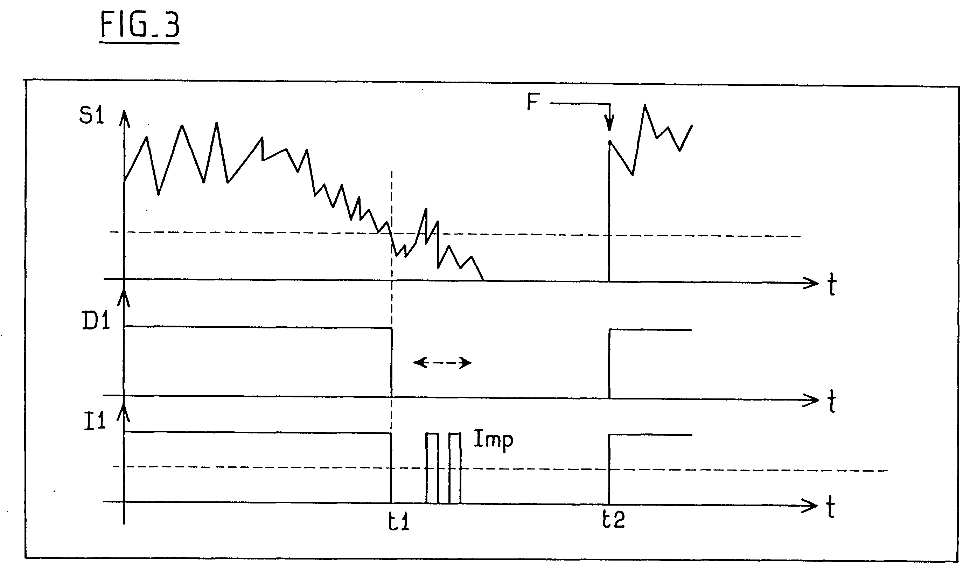

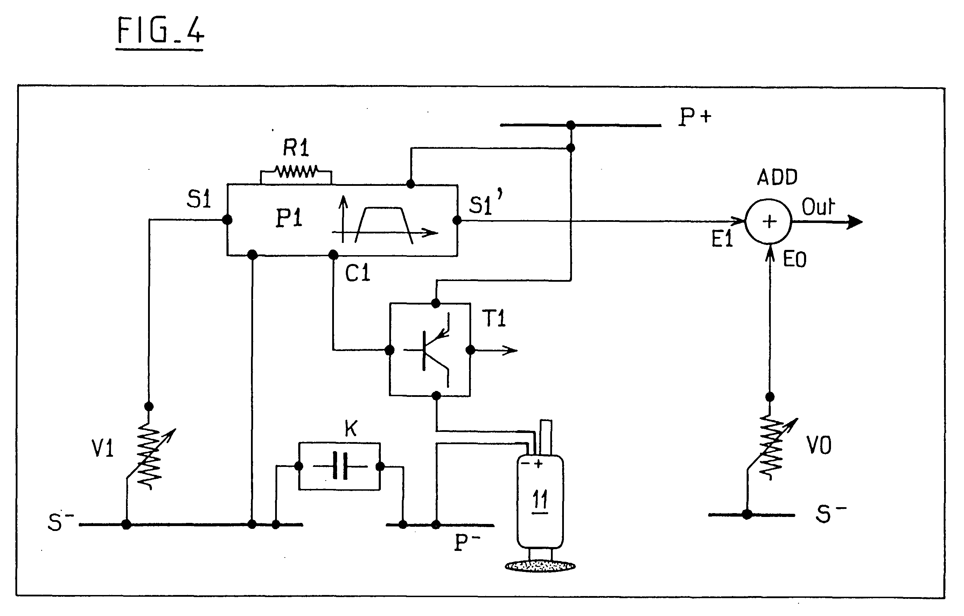

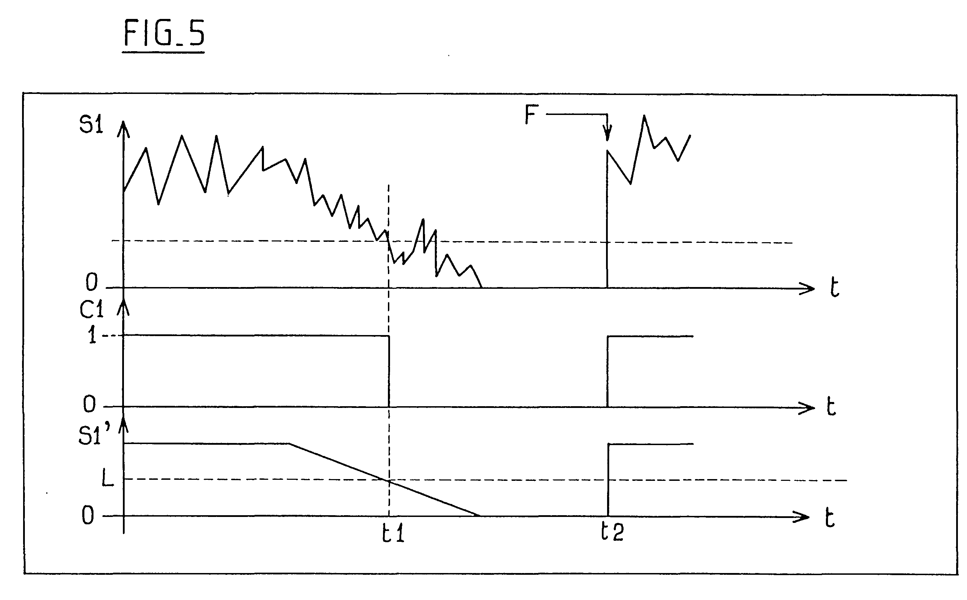

La description qui va suivre et les dessins annexés, donnés surtout à titre d'exemples non limitatifs, feront mieux comprendre comment l'invention est réalisée. Sur les dessins annexés :
. la figure 1 représente un dispositif de pompage selon l'invention ;
. la figure 2 représente un premier mode de réalisation de circuit de pilotage de dispositif de pompage selon l'invention ;
. la figure 3 représente un diagramme de signaux du circuit de la figure 2 ;
. la figure 4 représente un second mode de réalisation de circuit de pilotage de dispositif de pompage selon l'invention ;
. la figure 5 représente un diagramme de signaux du circuit de la figure 4.

Maintenant, en se reportant à la figure 1, on voit que le dispositif selon l'invention comporte un réservoir 3 multipoche comportant une poche principale 1 et une poche secondaire 2 séparées par une cloison 4, à leur base, mais communiquant entre elles à leur partie supérieure.

L'invention peut être mise en oeuvre sur des réservoirs comportant un nombre plus important de poches, voire des poches isolées, non séparées par une cloison.

De façon classique, le carburant est pompé dans la poche principale 1 par une conduite de départ 5 connectée à une pompe principale (non représentée). Le pompage est de préférence effectué dans un bassin ou bol de réserve 1' disposé au fond de la poche 1. Le bol de réserve 1' équipé de moyens connus en eux-mêmes (récupération d'une partie au moins du flux retour de carburant, clapet anti-retour, etc ...) permettant de maintenir un niveau minimal dans ce bol. Un tel bassin 1' permet de stabiliser le carburant lors de mouvements du véhicule. Généralement, une conduite de retour 6 de carburant aboutit dans ce bol 1. Le carburant non consommé par le moteur est ainsi refoulé vers le bol 1'.

La poche secondaire 2 de façon similaire peut comporter un bassin ou bol 2'. Une conduite de transfert 10 relie cette poche 2 à la poche principale 1. Une telle conduite 10 prélève de préférence le carburant près du fond du bassin ou bol 2' pour le rejeter dans le bassin ou bol 1'.

Selon l'invention, pour prélever le carburant, une pompe secondaire électrique Il est disposée sur la conduite 10 reliant la poche 2 à la poche 1. Une telle pompe électrique 11 est commandée par un circuit de pilotage 13. Un câblage 14 permet de relier la pompe électrique 11 au circuit de pilotage 13, disposé de préférence à l'extérieur du réservoir 1.

L'invention prévoit que le circuit de pilotage comporte une détection du niveau de carburant présent dans la poche secondaire 2 de préférence dans le bol 2'. A cette détection, le circuit de pilotage 13 peut interrompre le fonctionnement de la pompe électrique 11 lorsque le niveau de carburant dans la poche secondaire 2 ou dans le bol 2' est en dessous d'un seuil. Ainsi, on évite avantageusement que la pompe électrique 11 ne soit endommagée par un fonctionnement à sec.

Comme le montre la figure 1, la détection est effectuée par un détecteur 12 disposé dans la poche secondaire 2, de préférence à l'intérieur du bassin 2'. Le détecteur 12 est relié au circuit de pilotage 13 par un câblage 15.

Diverses variantes de détecteurs peuvent être envisagées. Ainsi, les détecteurs peuvent soit fournir une mesure proportionnelle au niveau de carburant, soit fournir une indication tout ou rien, selon deux états : inférieur à un niveau d'alerte ou supérieur à ce niveau d'alerte.

Un premier mode de réalisation a été envisagé pour mettre en oeuvre l'invention avec les détecteurs à deux états. La figure 2 illustre ainsi un circuit de pilotage AR1 adapté à un détecteur K1 à contact. Le contact K1 fournit une indication d'état I1. Selon l'exemple de la figure 2, le contact K1 est connecté entre un potentiel de masse S- et une entrée I1 du circuit de pilotage AR1. Dans ce cas, comme représenté figure 3, lorsque le niveau de carburant est inférieur à un niveau d'alerte, le contact K1 est dans un premier état, par exemple fermé et I1 = 0. Lorsque le niveau est supérieur au niveau d'alerte, le contact K1 est dans un second état, par exemple ouvert, et I1 = 1. Un exemple d'un tel détecteur est une alerte tubulaire à contact de réservoir de carburant. Dans un tel dispositif, un flotteur, une fois parvenu en bas d'un tube de coulissement, ferme un contact électrique indiquant que le niveau d'alerte est atteint.

Le circuit de pilotage AR 1 est destiné à commander le fonctionnement de la pompe électrique 11. Une sortie du circuit AR1 fournit par exemple un signal de commande D1 déclenchant le fonctionnement de la pompe 11. Ce signal D1 est de préférence appliqué à la base d'un transistor de puissance T1, connecté entre une borne d'alimentation P+ et une borne + de la pompe 11. L'autre borne - de la pompe 11 est connectée à la masse du véhicule ou borne d'alimentation P-. A la figure 2, on voit par exemple que le collecteur du transistor T1, de type PNP, est connecté à la borne + de la pompe 11, l'émetteur de T1 étant connecté à la borne P+ d'alimentation. D'autres dispositifs de commande pourront être utilisés par l'homme du métier sans sortir du cadre de la présente invention.

Comme on le voit à la figure 3 entre les instants t1 et t2, le contact K1 se ferme par intermittence lorsque le carburant oscille autour du niveau d'alerte (indiqué en pointillé). Une série d'impulsions Imp apparaît alors sur le signal I1. Le signal I1 issu du contact K1 nécessite donc un traitement pour éviter un déclenchement intempestif de la pompe 11. A cette fin, le circuit de pilotage AR1 comporte un filtre antirebond. Ce filtre peut être par exemple un filtre passe bas classique ou une inhibition temporisée du signal I1. Une telle inhibition temporisée pourra consister par exemple à ne pas prendre en compte les impulsions Imp de contact k1 illustrées figure 3 entre les instants t1 et t2. Le signal de commande D1 peut, par exemple, être inactivé pendant un certain temps après la transition du signal I1 (front descendant de l'instant tl). Une fois le temps d'inactivation écoulé depuis le dernier "front descendant", la commande D1 n'est plus inhibée et reproduit le signal I1. On voit ainsi à l'instant t2 que, lors du plein F du réservoir de carburant, le signal D1 reproduit le signal I1 à l'identique.

Dans ce mode de réalisation, le détecteur 12 est de préférence un contact électrique K1 placé sur une jauge de carburant ou une alerte tubulaire à contact disposée dans la poche secondaire 2.

Sur la figure 2, deux détecteurs proportionnels V0 et V1 sont également représentés. Les détecteurs V0 et V1 sont destinés à être placés dans la poche principale 1 et la poche secondaire 2 respectivement.

Le détecteur V0 fournit une première indication S0, du niveau de carburant contenu dans la poche principale 1. Le détecteur V1 fournit une seconde indication S1 de niveau de carburant dans la poche secondaire 2.

De façon classique, ces détecteurs V0 et V1 peuvent constituer des éléments d'une jauge de carburant fournissant une mesure globale du volume de carburant dans le réservoir 3. Pour celà, on additionne, après pondération éventuelle, les deux signaux S1 et S0, pour fournir un signal unique de mesure destiné à un dispositif indicateur de tableau de bord de véhicule automobile. On forme ainsi une jauge à détecteurs proportionnels multiples pour réservoirs multipoches.

Pour effectuer l'addition précitée, comme le montre la figure 2, un additionneur ADD reçoit, le signal S1 sur son entrée E1, l'entrée E0 recevant le signal S0 issu du détecteur proportionnel V0. La sortie OUT de l'additionneur ADD est reliée à un dispositif indicateur.

Un second mode de réalisation a été envisagé pour mettre en oeuvre l'invention avec un détecteur proportionnel. Un tel détecteur proportionnel peut être destiné uniquement au pilotage du fonctionnement de la pompe ou être utilisé à la fois par le circuit de pilotage et par la jauge de carburant comme décrit par la suite.

Comme le montre la figure 4, l'invention prévoit d'utiliser le signal issu d'un détecteur proportionnel V1 disposé dans la poche secondaire 2, pour la commande de la pompe secondaire électrique 11. Le détecteur V1 est donc connecté à une entrée S1 du circuit de pilotage P1.

Dans ce second mode de réalisation, le circuit de pilotage P1 reçoit un signal S1 proportionnel au niveau de carburant. Cependant, ce signal peut être perturbé par l'agitation du carburant dans le réservoir. Un filtrage du niveau est donc prévu dans le circuit P1. Comme le montre la figure 5, on obtient ainsi, à partir d'un signal S1, un signal S1' lissé ou filtré. Ce signal S1' est ensuite appliqué à un circuit de détection à seuil (seuil L indiqué en pointillé figure 5) pour fournir un signal de commande C1. Ce signal C1 peut être appliqué à un transistor de puissance T1, comme décrit précédemment.

Un avantage de cette réalisation est que la pompe électrique 11 est commandée de manière cohérente, les perturbations du signal S1 étant éliminées pour éviter une commande intempestive de la pompe 11.

La figure 5 montre ainsi que la pompe électrique 11 est maintenue en fonctionnement jusqu'à l'instant t1, lorsque le niveau moyen du signal S1, donc du carburant, devient inférieur au seuil L.

Il est prévu que le seuil L de déclenchement du circuit de pilotage P1 soit réglable. Une résistance variable R1 est avantageusement disposée à cette fin à l'extérieur du circuit P1 (voir figure 4).

Comme décrit précédemment dans les réservoirs multipoches, la jauge de carburant est généralement composée de plusieurs détecteurs proportionnels, disposés chacun dans une poche.

L'invention prévoit donc d'utiliser justement l'un des détecteurs proportionnels à la fois pour la mesure de jauge et pour la commande de fonctionnement de la pompe secondaire 11. Dans ce mode de réalisation préféré, le sinal S1 ou le signal filtré S1' est additionné au signal S0 mesurant le niveau de carburant dans la poche principale 1.

La figure 4 montre ainsi un exemple de connexion du circuit P1, des détecteurs V1, V0, et de l'additionneur ADD. On voit notamment qu'une sortie du circuit P1 fournissant le signal filtré S1' est connectée à l'entrée E1 de l'additionneur ADD. Ainsi le signal lissé ou filtré S1' est avantageusement fourni à la jauge de carburant. Comme représenté à la figure 4, le détecteur V1 peut être connecté entre une ligne S- et l'entrée S1 du circuit de pilotage P1. Cette ligne S- peut être couplée à la masse ou ligne d'alimentation P- par un condensateur K de découplage.

Un tel circuit permet d'utiliser tous types de détecteurs résistifs, l'alimentation étant fournie par le circuit de pilotage P1 lui-même.

Le détecteur V1 peut ainsi être un capteur potentiométrique à flotteur en contact avec les pistes résistives du potentiomètre. Selon une variante, le détecteur peut être une thermistance. D'autres équivalents fonctionnels peuvent être mis en oeuvre sans sortir du cadre de l'invention.

De façon avantageuse, dans les divers modes de réalisation de l'invention, on prévoit une prise de connexion particulière permettant de relier les lignes de câblage à un circuit d'autodiagnostic. On voit ainsi à la figure 1 une prise de diagnostic 16 à quatre bornes S-, P-, P+, S+. Les trois bornes S-, P-, P+ sont reliées aux lignes S-, P-, P+ correspondantes, le point S+ étant une borne de diagnostic supplémentaire. S+ est par exemple relié à une borne de détecteur V1 ou K1 ou à une borne du circuit de pilotage P1. Cette prise de connexion 16 permet ainsi un diagnostic du fonctionnement du circuit de pilotage 13 ou un diagnostic du fonctionnement de la jauge. On peut aussi détecter une rupture de contact ou un court-circuit d'un détecteur.

D'autres améliorations pourront être apportées par l'homme du métier, sans sortir du cadre de la présente invention. Il est préférable par exemple que la commande de fonctionnement intègre d'autres paramètres. Un accéléromètre peut ainsi être relié à la pompe ou au circuit de pilotage.

## Revendications

1. Dispositif de pompage de carburant pour réservoir (3) multipoche, notamment de véhicule automobile, comprenant une pompe principale prélevant le carburant dans une poche principale pour le diriger vers un lieu d'utilisation, au moins une pompe secondaire (11) électrique, apte à transférer du carburant d'une poche secondaire (2) vers la poche principale (1) et un circuit de pilotage de la pompe secondaire électrique (11), **caractérisé en ce que** le circuit de pilotage (13) comporte une détection de niveau de carburant dans la poche secondaire (2), de sorte que le circuit interrompt le fonctionnement de la pompe secondaire électrique (11) lorsqu'un niveau minimal est détecté dans la poche secondaire.

2. Dispositif de pompage selon la revendication 1, **caractérisé par** un filtrage de la détection de niveau, pour s'affranchir des oscillations du niveau de carburant.

3. Dispositif de pompage selon la revendication 1 ou 2, **caractérisé en ce que** la détection de niveau est fournie par un détecteur (V1) de jauge de mesure du volume de carburant du réservoir (3).

4. Dispositif de pompage selon l'une des revendications 1 à 3, **caractérisé en ce que** la détection de niveau est fournie par un détecteur proportionnel (V1) placé dans la poche secondaire 2.

5. Dispositif de pompage selon l'une des revendications 1 à 4, **caractérisé en ce que** la détection de niveau est fournie par un détecteur résistif.

6. Dispositif de pompage selon l'une des revendications 1 à 5, **caractérisé en ce que** la détection du niveau minimal est fournie par un détecteur à deux états.

7. Dispositif de pompage selon l'une des revendications 1 à 6, **caractérisé en ce que** la détection de niveau est fournie par un contact électrique (K1).

8. Dispositif de pompage selon l'une des revendications 1 à 7, **caractérisé par le fait que** le circuit de pilotage (13) est relié à une pièce de connexion (16) pour un autodiagnostic.

9. Dispositif de pompage selon l'une des revendications 1 à 8, **caractérisé par le fait que** la détection de niveau est opérée dans un bol de réserve (2') présent dans la poche secondaire (2) et que la pompe secondaire (2') prélève le carburant dans ce bol de réserve (2') pour le transférer dans un second bol de réserve (1') présent dans la poche principale (1).

10. Réservoir de carburant pour véhicule automobile, **caractérisé par le fait qu'**il est équipé d'un dispositif de pompage conforme à l'une des revendications 1 à 9.

## Patentansprüche

1. Vorrichtung zum Pumpen von Kraftstoff für einen Mehrkammertank (3), insbesondere eines Kraftfahrzeuges mit einer Hauptpumpe, die den Kraftstoff aus einer Hauptkammer fördert, um ihn zu einer Stelle des Verbrauchs zu leiten, wenigstens einer elektrischen Sekundärpumpe (11), die Kraftstoff von einer sekundären Kammer (2) zur Hauptkammer (1) übertragen kann, und einer Steuerschaltung für die elektrische Sekundärpumpe (11), **dadurch gekennzeichnet, daß** die Steuerschaltung (13) die Erfassung des Pegels des Kraftstoffes in der sekundären Kammer (2) umfaßt derart, daß die Schaltung die Arbeit der elektrischen Sekundärpumpe (11) unterbricht, wenn ein minimaler Pegel in der Sekundärkammer erfaßt wird.

2. Vorrichtung zum Pumpen nach Anspruch 1, **gekennzeichnet durch** eine Glättung der Erfassung des Pegels, um sie von Schwingungen des Pegels des Kraftstoffes zu befreien.

3. Vorrichtung zum Pumpen nach Anspruch 1 oder 2, **dadurch gekennzeichnet, daß** die Erfassung des Pegels durch einen Meßwertgeber (V1) zum Messen des Volumens des Kraftstoffes des Tankes (3) erfolgt.

4. Vorrichtung zum Pumpen nach einem der Ansprüche 1 bis 3, **dadurch gekennzeichnet, daß** die Erfassung des Pegels über einen Proportionaldetektor (V1) erfolgt, der in der Sekundärkammer (2) angeordnet ist.

5. Vorrichtung zum Pumpen nach einem der Ansprüche 1 bis 4, **dadurch gekennzeichnet, daß** die Erfassung des Pegels über einen Widerstandsdetektor erfolgt.

6. Vorrichtung zum Pumpen nach einem der Ansprüche 1 bis 5, **dadurch gekennzeichnet, daß** die Erfassung des Minimalpegels über einen Detektor mit zwei Zuständen erfolgt.

7. Vorrichtung zum Pumpen nach einem der Ansprüche 1 bis 6, **dadurch gekennzeichnet, daß** die Erfassung des Pegels über einen elektrischen Kontakt (K1) erfolgt.

8. Vorrichtung zum Pumpen nach einem der Ansprüche 1 bis 7, **dadurch gekennzeichnet, daß** die Steuerschaltung (13) mit einem Verbindungsteil (16) für eine Selbstdiagnose verbunden ist.

9. Vorrichtung zum Pumpen nach einem der Ansprüche 1 bis 8, **dadurch gekennzeichnet, daß** die Erfassung des Pegels in einem Reservebehälter (2') erfolgt, der sich in der Sekundärkammer (2') befindet und daß die Sekundärpumpe (2') Kraftstoff aus dem Reservebehälter (2') fördert, um ihn in einen zweiten Reservebehälter (1') zu befördern, der sich in der Hauptkammer (1) befindet.

10. Kraftstofftank für ein Kraftfahrzeug, **dadurch gekennzeichnet, daß** er mit einer Vorrichtung zum Pumpen nach einem der Ansprüche 1 bis 9 ausgerüstet ist.

## Claims

1. A fuel pump device for a multiple-compartment tank (3), in particular for a motor vehicle, the device comprising a main pump taking fuel from a main compartment to deliver it to a site of use, at least one secondary electrical pump (11) suitable for transferring fuel from a secondary compartment (2) to the main compartment (1), and a control circuit for controlling the secondary electrical pump (11), the device being **characterized in that** the control circuit (13) includes means for detecting the level of fuel in the secondary compartment (2) so that the circuit interrupts operation of the secondary electrical pump (11) when a minimum level is detected in the secondary compartment.

2. A pumping device according to claim 1, **characterized by** level detection being filtered to make it insensitive to oscillations in fuel level.

3. A pumping device according to claim 1 or claim 2, **characterized in that** level detection is supplied by a detector (V1) of a gauge for measuring the volume of fuel in the tank (3).

4. A pumping device according to any one of claims 1 to 3, **characterized in that** level detection is supplied by a proportional detector (V1) placed in the secondary compartment (2).

5. A pumping device according to any one of claims 1 to 4, **characterized in that** level detection is supplied by a resistive detector.

6. A pumping device according to any one of claims 1 to 5, **characterized in that** minimum level detection is supplied by a two-state detector.

7. A pumping device according to any one of claims 1 to 6, **characterized in that** level detection is supplied by an electrical contact (K1).

8. A pumping the device according to any one of claims 1 to 7, **characterized by** the fact that the control circuit (13) is connected to a connector piece (16) for self-diagnosis.

9. A pumping device according to any one of claims 1 to 8, **characterized by** the fact that level detection is performed in a reserve bowl (2') present in the secondary compartment (2), and that the secondary pump (11) takes fuel from the reserve bowl (2') and transfers it into a second reserve bowl (1') present in the main compartment (1).

10. A motor vehicle fuel tank, **characterized by** the fact that it is fitted with a pumping device according to any one of claims 1 to 9.
